# FASCICULE DE BREVET EUROPEEN

(11) **EP 1 538 853 B1**
(45) Date de publication et mention de la délivrance du brevet: **04.10.2006**
(21) Numéro de dépôt: 04300678.2
(22) Date de dépôt: 14.10.2004
(51) Int. Cl.: H04Q 7/22, H04J 3/16

(54) **Procédé d'allocation dynamique étendue de ressources de communication**
Verfahren zur dynamischen Zuweisung von Kommunikationsresourcen
Method of dynamic allocation of resources of communication

(30) Priorité: 02.12.2003 FR 0350957
(43) Date de publication de la demande: 08.06.2005
(73) Titulaire: SAGEM Communication, 75015 Paris (FR)
(72) Inventeur: Jean, Olivier M., 94300, Vincennes (FR)
(74) Mandataire: Schmit, Christian Norbert Marie

(56) Documents cités:
- EP-A- 1 248 479
- WO-A-00/56095
- WO-A-99/41918
- WO-A-02/093776
- "Digital cellular telecommunications system (Phase 2+); Multiplexing and Multiple Access on the Radio Path (3GPP TS 45.002 version 5.7.0 Release 5); ETSI TS 145 002" ETSI STANDARDS, EUROPEAN TELECOMMUNICATIONS STANDARDS INSTITUTE, SOPHIA-ANTIPO, FR, vol. 3-G1, no. V570, novembre 2002 (2002-11), XP014010654 ISSN: 0000-0001

## Description

### DOMAINE DE L'INVENTION

L'invention a pour objet un procédé d'allocation dynamique étendue de ressources de communication. Le domaine de l'invention est celui des réseaux de télécommunications, et de l'allocation de ressources de communication dans de tels réseaux. Plus particulièrement le domaine de l'invention est celui des réseaux GSM, et plus spécifiquement des réseaux GSM compatibles avec le service GPRS.

### ETAT DE LA TECHNIQUE

Dans l'état de la technique on connaît des solutions d'allocation dynamique de ressources de communication dans un réseau GSM fonctionnant en mode GPRS (Global Packet Radio Service, pour sevice de paquets radio global).

Pour le mode GPRS, lors de la connexion d'un terminal au réseau, celui-ci se voit allouer un certain nombre de ressources de communication. Ces ressources sont décrites, entre autres, par une classe de fonctionnement du terminal. Chaque classe est identifiée par un numéro dans la norme GPRS. Chaque classe est caractérisée par un nombre Nmax maximum de fenêtres d'émission, un nombre Mmax maximum de fenêtres de réception, et une valeur S somme des fenêtres de réception et d'émission, qui ne doit pas être dépassée au cours d'une trame TDMA. Pour une classe on parle d'une configuration M + N, où M est le nombre de fenêtres utilisables pour recevoir des données, et N le nombre de fenêtres utilisables pour émettre des données. Il s'agit d'une configuration multi fenêtres, et M + N=S.

Un téléphone se voit ensuite allouer un certain nombre de canaux. Un canal est défini dans une trame TDMA (Time Division Multiple Access, pour accès multiple par division dans le temps). Une trame TDMA est divisée en 8 fenêtres temporelles, chaque fenêtre temporelle correspondant alors à un canal. Un canal est caractérisé par la position (de 1 à 8) de sa fenêtre temporelle au sein de la trame TDMA. Ainsi, le canal numéro 1 est matérialisé par la succession des fenêtres temporelles de rang 1 dans chaque trame TDMA. Un canal comporte une voie montante sur laquelle le terminal émet des données et une voie descendante sur laquelle le terminal reçoit des données.

Pour chaque canal qui lui a été alloué, le terminal se voit affecter un numéro, aussi appelé USF (Uplink State Flag, pour drapeau d'état de la voie montante). L'USF est codé sur 3 bits et peut donc prendre 8 valeurs différentes. Une valeur d'USF est transmise via la voie descendante d'un canal. Chaque paquet de données transmis sur la voie descendante comporte un USF. Un paquet de données est l'ensemble des données transmises au cours de quatre fenêtres temporelles de rang identique dans quatre trames TDMA consécutives.

Un terminal ne peut recevoir et émettre des données que dans un canal qui lui a été alloué. Dans une voie descendante un terminal sait qu'un paquet lui est destiné car ce paquet comporte une information de destinataire. Dans une voie montante, le terminal sait qu'il peut émettre car il en a reçu l'autorisation.

Une première solution, pour autoriser l'émission, est celle de la norme telle que définie par le 3GPP. Cette solution est telle que pour chaque canal, l'allocation de la voie montante est conditionnée par la voie descendante associée. Ainsi, pour qu'un terminal puisse émettre un paquet de données sur la voie montant du canal 1, il faut qu'il ait reçu, dans le paquet de données correspondant de la voie descendante du canal 1, un numéro USF dont la valeur correspond à celle qui a été attribuée audit terminal pour le canal 1. Il en va de même pour les canaux 2 à 8.

Dans la pratique les échanges de données entre le terminal et le réseau se font par blocs radio, un bloc radio correspondant aux données contenues dans quatre fenêtres temporelles de quatre trames TDMA consécutives. Quatre trames TDMA consécutives forment un bloc période. Le contenu du paquet de données reçu dans un bloc radio d'un bloc période conditionne l'émission de données au bloc radio correspondant du bloc période suivant. Cela signifie que le terminal pourra émettre un paquet de données sur la voie montante du canal 1 durant la bloc période BPn, si et seulement s'il a reçu un numéro d'USF lui correspondant sur la voie descendante du canal 1 au cours de la bloc période BPn-1. Une contrainte supplémentaire de la norme et de la technique est que pour une trame TDMA d'un bloc période, un terminal ne peut pas recevoir et émettre plus de S paquets.

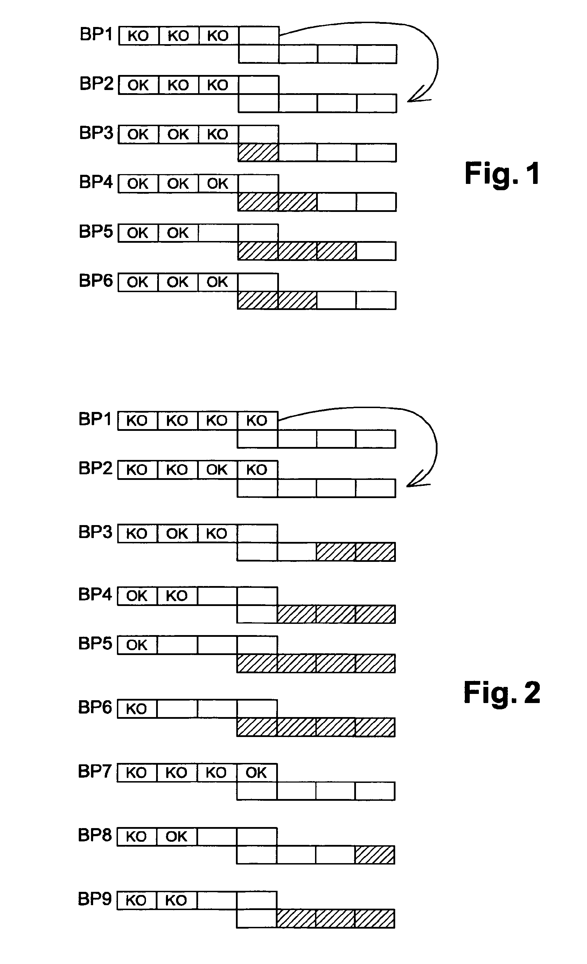

La figure 1 montre une mise en oeuvre de la solution de la norme. La figure 1 montre, pour des blocs périodes successifs BP1 à BP6, une partie des blocs radio correspondant aux canaux attribués à un terminal. Pour chaque bloc période la figure 1 montre les quatre premiers paquets de données, correspondant à quatre blocs radio, des voies descendantes, et, sur la ligne du dessous, les quatre premiers paquets de données des voies montantes. On rappelle ici que la somme du nombre de paquets de données lus sur les voies descendantes, et la somme de paquets de données émis sur les voies montantes par le terminal durant une trame TDMA ne doit pas excéder S. Pour la figure 1 on considère que le terminal fonctionne en classe 11, c'est à dire que NmaX vaut 3, MmaX vaut 4, et S vaut 5.

On considère dans ce document qu'un paquet est un paquet de données, et qu'il correspond aux données transmise via un bloc radio.

La figure 1 montre que pour un bloc période BP1 le terminal a lu les 3 premiers paquets des voies descendantes, et que dans aucun de ces paquets le terminal n'a trouver de numéro USF lui correspondant. Pour le bloc période BP1, on ne sait pas ce que le terminal est autorisé à faire sur les voies montantes car il manque les informations des voies descendantes du bloc période précédant le bloc période BP1.

La figure 1 montre un bloc période BP2 pour lequel le terminal a lu les trois premiers paquets des voies descendantes. Le numéro USF contenu dans le premier paquet correspond au terminal. Les numéros USF des deux paquets suivants ne correspondent pas au terminal. Grâce à la lecture faite pour le bloc période BP1, le terminal sait qu'il n'est pas autorisé à émettre durant le bloc période BP2.

La figure 1 montre un bloc période BP3 pour lequel le terminal a lu les trois premiers paquets des voies descendantes. Les numéros USF contenus dans les deux premiers paquets correspondent au terminal. Le numéro USF contenu dans le troisième paquet lu ne correspond pas au terminal. Grâce à la lecture fait pour le bloc période BP2, le terminal sait qu'il est autorisé à émettre via le premier paquet des voies montantes du bloc période BP3. Ce qu'il fait.

La figure 1 montre un bloc période BP4 pour lequel le terminal a lu les trois premiers paquets des voies descendantes. Les numéros USF contenus dans ces trois premiers paquets correspondent au terminal. Grâce à la lecture fait pour le bloc période BP2, le terminal sait qu'il est autorisé à émettre via les deux premiers paquets des voies montantes du bloc période BP3. Ce qu'il fait. A ce stade, le terminal est forcement en configuration multi fenêtres 3 + 2 = 5.

La figure 1 montre un bloc période BP5 pour lequel le terminal a lu les deux premiers paquets des voies descendantes. Le terminal ne lit que 2 paquets car il sait depuis la lecture du bloc période BP4 qu'il est autorisé à émettre trois paquets lors du bloc période BP5. Cependant la somme des paquets lus et émis ne peut pas excéder 5. Les numéros USF contenus dans les deux premiers paquets correspondent au terminal. Grâce à la lecture fait pour le bloc période BP4, le terminal sait qu'il est autorisé à émettre via les trois premiers paquets des voies montantes du bloc période BP5. Ce qu'il fait.

On constate qu'entre le bloc période BP4, et le bloc période BP5, le terminal a changé de configuration, puisque au bloc période BP5 il est en configuration multi fenêtres 2 + 3 = 5.

La figure 1 montre un bloc période BP6 pour lequel le terminal a lu les trois premiers paquets des voies descendantes. Le terminal a lu trois paquets car il sait depuis la lecture du bloc période BP5 qu'il ne pourra émettre que 2 paquets au bloc période BP6. Les numéros USF contenus dans ces trois premiers paquets correspondent au terminal. Grâce à la lecture fait pour le bloc période BP5, le terminal sait qu'il est autorisé à émettre via les deux premiers paquets des voies montantes du bloc période BP6. Ce qu'il fait. A ce stade, le terminal est revenu en configuration multi fenêtres 3 + 2 = 5.

Entre les blocs période BP5 et BP6, le terminal a à nouveau changé de configuration multi fenêtres.

Dans la norme, il est donc impossible de se maintenir dans certaines configurations multi fenêtres. Dans le cas de la classe 11, il est impossible à un téléphone d'être et de se maintenir dans une configuration 2 + 3 par exemple. En effet, pour émettre sur trois canaux, il faut être capable d'en écouter 3 pour lire les numéros USF reçus dans les paquets de données des voies descendantes de ces canaux. Cependant le terminal est limité à 2, par la configuration multi fenêtres, mais aussi par ses capacités radio et sa puissance de calcul. Dans la norme, les capacités d'émission du terminal sont donc bridées.

Avec la norme le débit le plus important que l'on puisse avoir en classe 11 est donc 2,5 paquets par trame TDMA, et on doit changer à chaque bloc période de configuration multi fenêtres ce qui est très contraignant pour le terminal qui doit se paramètrer à chaque changement de configuration.

De plus, cette solution ne permet pas aux constructeurs de mobiles d'accéder aux classes multi fenêtres pour lesquelles N peut devenir supérieur à M ; ce qui est le cas pour les classes 11 et 12.

Dans l'état de la technique on connaît aussi une solution d'un groupe de travail appelé le GERAN et dont l'activité est de mener une réflexion sur les normes de téléphonie mobile. Dans cette solution une autorisation d'émettre reçu dans un canal d'ordre C autorise l'émission dans tous les canaux d'ordre supérieur ou égal à C, dans le respect de la classe, à savoir des nombres Nmax, Mmax, et S. Cette solution alternative a été elle aussi acceptée et normalisée par l'organisation 3GPP.

La figure 2 montre une mise en oeuvre de la solution du GERAN dans le cadre de la classe 12, c'est à dire avec NmaX vaut 4, MmaX vaut 4, et S = 5.

La figure 2 montre un bloc période BP1 dans lequel le terminal a lu Nmax paquets des voies descendantes. Dans aucun de ces paquets le terminal n'a trouvé de numéro USF lui correspondant. Le terminal est dans une configuration multi fenêtres 4 + 1 = 5

La figure 2 montre un bloc période BP2, dans lequel le terminal a lu les quatre premiers paquets des voies descendantes. Dans le troisième paquet le terminal a trouvé un numéro USF lui correspondant. Le terminal sait donc qu'au bloc période suivant il pourra émettre via les paquets d'ordre supérieur ou égal à 3.

Le terminal passe en configuration multi fenêtres 3 + 2 = 5, car il sait qu'il doit au moins écouter 3 paquets au bloc période suivant, de manière à éventuellement se maintenir dans la configuration multi fenêtres 3 + 2 = 5.

La figure 2 montre un bloc période BP3, dans lequel le terminal a lu les trois premiers paquets des voies descendantes. Dans le deuxième paquet le terminal a trouvé un numéro USF lui correspondant. Le terminal sait donc qu'au bloc période suivant il pourra émettre via les paquets d'ordre supérieur ou égal à 2. Depuis la lecture du bloc période BP2, le terminal sait qu'il est autorisé à émettre via les paquets 3 et 4 des voies montantes, ce qu'il fait.

Le terminal passe en configuration multi fenêtres 2 + 3 = 5, car il sait qu'il doit au moins écouter 2 paquets au bloc période suivant, de manière à éventuellement se maintenir dans la configuration multi fenêtres 2 + 3 = 5.

La figure 2 montre un bloc période BP4, dans lequel le terminal a lu les deux premiers paquets des voies descendantes. Dans le premier paquet le terminal a trouvé un numéro USF lui correspondant. Le terminal sait donc qu'au bloc période suivant il pourra émettre via les paquets d'ordre supérieur ou égal à 1. Depuis la lecture du bloc période BP3, le terminal sait qu'il est autorisé à émettre via les paquets 2 à 4 des voies montantes, ce qu'il fait.

Le terminal passe en configuration multi fenêtres 1 + 4 = 5, car il sait qu'il doit au moins écouter 1 paquet au bloc période suivant, de manière à éventuellement se maintenir dans la configuration multi fenêtres 1 + 4 = 5, ou tout simplement pour changer de configuration multi fenêtres.

La figure 2 montre un bloc période BP5, dans lequel le terminal a lu le premier paquet des voies descendantes. Dans le premier paquet le terminal a trouvé un numéro USF lui correspondant. Le terminal sait donc qu'au bloc période suivant il pourra émettre via les paquets d'ordre supérieur ou égal à 1. Depuis la lecture du bloc période BP3, le terminal sait qu'il est autorisé à émettre via les paquets 2 à 4 des voies montantes, ce qu'il fait.

Le terminal passe en configuration multi fenêtres 1 + 4 = 5, car il sait qu'il doit au moins écouter 1 paquet au bloc période suivant, de manière à éventuellement se maintenir dans la configuration multi fenêtres 1 + 4 = 5.

La figure 2 montre un bloc période BP6, dans lequel le terminal a lu le premier paquet des voies descendantes. Ce paquet ne comporte pas de numéro USF correspondant au terminal. Le terminal sait donc qu'au bloc période suivant il ne pourra pas émettre. Depuis la lecture du bloc période BP5, le terminal sait qu'il est autorisé à émettre via les paquets 1 à 4 des voies montantes, ce qu'il fait.

Le terminal passe en configuration multi fenêtres 4 + 1 = 5, car il sait qu'il ne pourra pas émettre au bloc période suivant, et qu'il lui faut se préparer à lire 4 paquets pour connaître ses prochaines allocations.

La figure 2 montre un bloc période BP7, dans lequel le terminal a lu les quatre premiers paquets des voies descendantes. Dans le quatrième paquet le terminal a trouvé un numéro USF lui correspondant. Le terminal sait donc qu'au bloc période suivant il pourra émettre via le paquet d'ordre 4. Depuis la lecture du bloc période BP6, le terminal sait qu'il n'est pas autorisé à émettre.

La figure 2 montre un bloc période BP8, dans lequel le terminal a lu les quatre premiers paquets des voies descendantes. Dans le deuxième paquet le terminal a trouvé un numéro USF lui correspondant. Le terminal sait donc qu'au bloc période suivant il pourra émettre via les paquets d'ordre supérieur ou égal à 2. Depuis la lecture du bloc période BP7, le terminal sait qu'il est autorisé à émettre via le paquet 4 des voies montantes, ce qu'il fait.

Le terminal passe en configuration multi fenêtres 2 + 3 = 5, car il sait qu'il doit au moins écouter 2 paquets au bloc période suivant, de manière à éventuellement se maintenir dans la configuration multi fenêtres 2 + 3 = 5.

La figure 2 montre un bloc période BP9, dans lequel le terminal a lu les deux premiers paquets des voies descendantes. Dans aucun de ces paquets il ne trouve de numéro USF lui correspondant. Le terminal sait donc qu'il ne pourra pas émettre au bloc période suivant. Depuis la lecture du bloc période BP8, le terminal sait qu'il est autorisé à émettre via les paquets 2 à 4 des voies montantes, ce qu'il fait.

Le terminal passe en configuration multi fenêtres 4 + 1 = 5, car il sait qu'il doit au moins écouter 4 paquets au bloc période suivant, de manière à éventuellement obtenir un droit d'émettre.

Cette solution présente au moins deux inconvénients. Un premier inconvénient et le changement quasi permanent de configuration multi fenêtres du terminal. En fait à chaque fois que le nombre de paquets alloué au terminal pour émettre change, le terminal est obligé de changer de configuration.

Le deuxième inconvénient est le manque de souplesse de cette solution pour la diminution du nombre de paquets alloués au terminal pour émettre. En effet, pour réduire ce nombre, il faut forcément passer par un bloc période au cours duquel le terminal ne pourra pas émettre. Le passage par ce bloc période permet au terminal de passer par une configuration multi fenêtres 4 + 1 = 5, ce qui est la seul lui permettant d'obtenir des droits pour émettre via 1, 2, 3 ou 4 paquets.

Document WO 02/093776 décrit également un procédé d'allocation dynamique de ressources similaire à la solution telle que définie par le GERAN

Aucune des solutions de l'état de la technique n'est donc suffisamment souple, et suffisamment légère en termes de ressources système à mettre en oeuvre par le terminal.

### BREF EXPOSE DE LA SOLUTION

Dans l'invention on résout ces problèmes, dans une configuration multi fenêtres donnée M + N = S, en rendant l'allocation des N - 1 premiers paquets d'émission dépendant des M - 1 premier paquet reçus via les voies descendantes, et en rendant l'allocation des N - M + 1 paquets d'émission suivant les N - 1 premier dépendant du M ième paquet reçu via les voies descendantes. On évite ainsi les changements intempestifs de configurations multi fenêtres, et on reste très souple en termes d'augmentation ou de diminution du débit sur les voies montantes.

L'invention a donc pour objet un procédé d'allocation dynamique étendue de ressources de communication à un terminal connecté à un réseau de télécommunication, une ressource étant un canal de communication comportant une voie descendante, pour recevoir, et une voie montante, pour émettre, dans lequel une voie montante d'un canal de communication dans un bloc période BP est allouée au terminal via un paramètre reçu par la voie descendante dudit canal correspondant dans le bloc période BP-1, ce paramètre désignant le terminal parmi ceux susceptible d'écouter la voie descendante, le terminal étant capable, par configuration, d'écouter M canaux, et d'émettre sur N canaux, M étant inférieur ou égal à N, le procédé étant caractérisé en ce que :
- la lecture des M - 1 premiers canaux du bloc période BP-1 conditionne la possibilité d'émettre sur les M - 1 premiers canaux du bloc période BP,
- la lecture du Mième canal du bloc période BP-1 conditionne la possibilité d'émettre sur les N - M + 1 autres canaux parmi les N canaux.

Avantageusement l'invention est aussi caractérisée en ce que le terminal, et le réseau de télécommunication, fonctionnent selon le protocole GPRS.

Avantageusement l'invention est aussi caractérisée en ce que M < N.

Avantageusement l'invention est aussi caractérisée en ce que M + N doit être inférieure ou égal à S.

Avantageusement l'invention est aussi caractérisée en ce que S vaut 5.

Avantageusement l'invention est aussi caractérisée en ce que M vaut 2 et N vaut 3.

Avantageusement l'invention est aussi caractérisée en ce que le terminal est un téléphone mobile fonctionnant selon la classe 11 des classes à pluralité de fenêtres.

### BREVE DESCRIPTION DES FIGURES

- Figure 1: une illustration de l'allocation de ressource sur les voies montantes selon un premier état de la technique.
- Figure 2: une illustration de l'allocation de ressource sur les voies montantes selon un deuxième état de la technique.
- Figure 3: une illustration d'étape d'un procédé mettant en oeuvre l'invention.
- Figure 4: une illustration de l'allocation de ressource sur les voies montantes selon l'invention.

### DESCRIPTION D'UN MODE DE REALISATION PREFERE

Une grande partie de l'invention consiste à avoir détecter les problèmes posés par l'état de la technique. En plus de cette détection l'invention propose une solution à ces problèmes.

Dans la description on met en oeuvre un terminal et un réseau de télécommunication. Dans un exemple préféré, le terminal est un téléphone mobile GSM compatible GPRS, et le réseau de télécommunication est donc un réseau GSM / GPRS. Dans la pratique l'invention s'applique à tout protocole TDMA requérant la mise en oeuvre d'une allocation dynamique de ressources.

Dans la description, lorsque l'on prête une action au terminal ou au réseau, cette action est en fait effectuée par un microprocesseur du terminal, ou d'un appareil de l'infrastructure du réseau. Le microprocesseur est lui-même commandé par des codes instructions enregistrés dans une mémoire de l'appareil effectuant l'action.

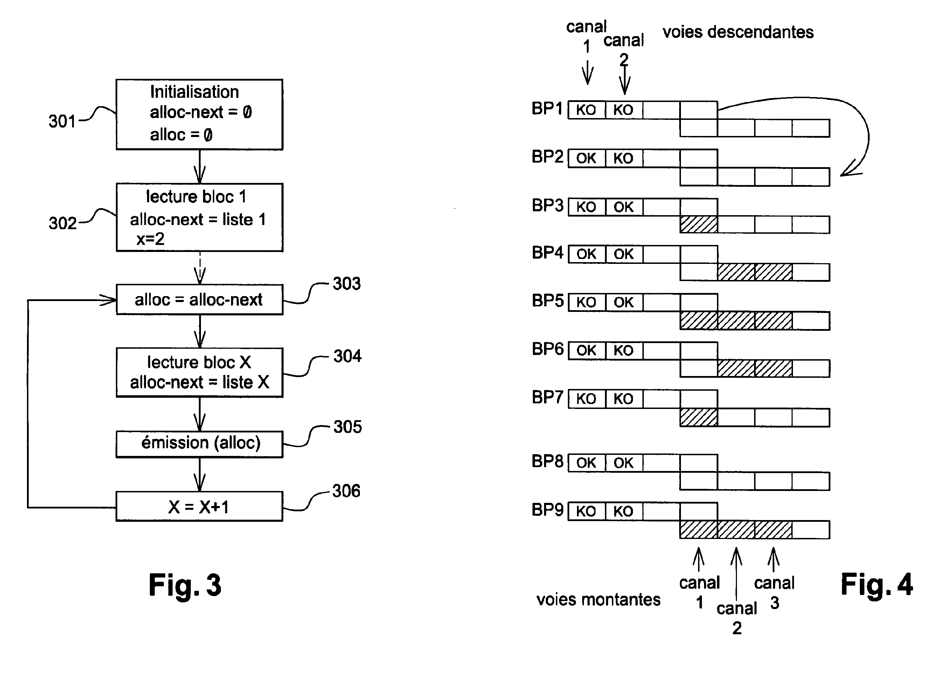

La figure 3 montre une étape 301 préliminaire d'initialisation dans laquelle un terminal se connecte à un réseau de télécommunication en mode GPRS. Dans l'étape 301 le terminal se voit attribuer des ressources de communication. En particulier le terminal se voit attribuer une liste de canaux dont il doit lire les paquets des voix descendantes afin d'au moins déterminer les ressources d'émission qui lui sont dynamiquement allouées. Les ressources d'émission qui lui sont dynamiquement allouées sont, on le rappelle , des fenêtres temporelles dans des blocs période, ces fenêtres temporelles matérialisant un ou plusieurs canaux. Par convention, le premier canal attribué au terminal est désigné comme étant le canal 1, le second le canal 2 et ainsi de suite. Pour chaque canal qui lui est attribué, le terminal se voit attribuer un numéro USF.

Dans notre exemple on considère que le terminal déclare fonctionner dans la classe multi fenêtres 11. Le réseau attribue donc au terminal MmaX vaut 4 canaux, numérotés dans cette description de 1 à 4, pour lesquels le terminal devra écouter si possible les voies descendantes afin de déterminer dans quelles voies montantes de ces canaux il est autorisé à émettre. Pour chacun de ces canaux attribués, le réseau attribue au terminal un numéro USF désignant le terminal dans le canal. Ainsi le terminal se voit attribuer le numéro USF_1 pour le canal 1, USF_2 pour le canal 2, USF_3 pour le canal 3, et USF_4 pour le canal 4.

Dans notre exemple, le terminal déclare de plus fonctionner selon une configuration multi fenêtres 2 + 3 = 5. Le terminal n'écoute alors que 2 des canaux qui lui ont été attribués selon sa classe. Par convention, on considère qu'il s'agit des canaux 1 et 2. Dans cette configuration le terminal est autorisé à émettre dans 3 canaux, par convention les canaux 1, 2, et 3, au grès des allocations dynamiques.

Dans l'étape 301, le terminal initialise aussi deux listes de canaux. Une première liste 'alloc' correspondant aux canaux dans lesquelles il est autorisé à émettre dans le bloc période courant. Une deuxième liste 'alloc_next' correspond aux canaux dans lesquelles le terminal pourra émettre dans le bloc période suivant. A l'initialisation ces listes sont vides.

On rappelle ici qu'un bloc période est composé de quatre trames TDMA, permettant la transmission de 8 blocs radio, et que pour un bloc période on n'envisage dans cette description que le traitement de 4 blocs radio, car un téléphone mobile par configuration et structure ne peut en traiter que 4. Dans d'autres configurations, un téléphone traiterait plus ou moins de bloc radio.

On note ici que le recours aux listes 'alloc' et 'alloc_next' n'est effectué qu'en vu d'exposer l'invention de manière claire. Toute autre forme d'implémentation est envisageable.

De l'étape 301 on passe à une étape 302 de réception et lecture du premier bloc période, ici désigné comme le bloc période BP1. La figure 4 illustre la réception de ces blocs période aux cours des étapes du procédé. Le bloc période BP1 est le premier bloc période que reçoit le terminal une fois qu'il est correctement paramètré. Les références aux blocs période sont maintenant faites relativement à la figure 4.

La figure 4 montre que le terminal lit les deux premiers paquets du bloc période BP1. Cela est conforme à la configuration multi fenêtres 2 + 3 = 5 du terminal. Ces deux premiers paquets correspondent aux données transmises via les voies descendantes des canaux 1 et 2 au cours du bloc période BP1. Chacun de ces paquets comporte un numéro USF. Dans notre exemple, le numéro USF du premier paquet n'est pas USF_1, le numéro USF du deuxième paquet n'est pas USF_2. Le terminal n'a donc aucune ressource allouée pour émettre lors du bloc période suivant et la liste 'alloc_next' reste vide.

Dans la mesure ou le bloc période BP1 est le premier bloc période traité, le terminal n'a aucune ressource disponible pour émettre via les voies montantes des canaux du bloc période BP1. Il n'émet donc pas.

A la fin de l'étape 302, de manière symbolique pour la description, on affecte la valeur 2 à une variable X. Cette variable X correspond au bloc période en cours de traitement.

De l'étape 302 on passe à une étape 303 dans laquelle le terminal copie le contenu de la liste 'alloc_next' dans la liste 'alloc'. Ce transfert écrase le précédent contenu de la liste 'alloc'.

De l'étape 303 on passe à une étape 304 de lecture du bloc période BPX. A ce stade X vaut 2.

Dans l'étape 304 le terminal lit les deux premiers paquets du bloc période BP2. Le premier de ces paquets comporte un numéro USF valant USF_1. Le deuxième paquet comporte un numéro USF qui n'est pas USF_2. Le terminal met à jour la liste 'alloc_next', en écrasant son précédant contenu. La liste 'alloc_next' comporte maintenant, selon l'invention, la valeur 1. Cela signifie qu'au prochain bloc période le terminal pourra émettre via la voie montante du canal 1.

De l'étape 304 on passe à une étape 305 dans laquelle le terminal parcourt la liste 'alloc' pour savoir sur quel canal il est autorisé à émettre. A ce stade cette liste est vide. Le terminal n'est toujours pas autorisé à émettre.

De l'étape 305 on passe à une étape 306 dans laquelle le terminal incrémente la valeur de X de une unité. Dans la pratique cela signifie que le terminal passe au traitement du bloc période suivant.

Bien sur avant de passer au traitement du bloc période suivant, le terminal a traité, selon les étapes 303 à 305, les 3 autres trames TDMA du bloc période en cour.

De l'étape 306 on repasse alors à l'étape 303.

A ce stade X VAUT 3.

Dans l'étape 303 le terminal affecte le contenu de la liste 'alloc_next' à la liste 'alloc'. La liste 'alloc' comporte alors la valeur 1.

Dans l'étape 304 le terminal lit les deux premiers paquets du bloc période BP4. Le premier de ces paquets comporte un numéro USF ne valant pas USF_1. Le deuxième paquet comporte un numéro USF valant USF_2. Le terminal met à jour la liste 'alloc_next', en écrasant son précédant contenu. La liste 'alloc_next' comporte maintenant, selon l'invention, les valeurs 2 et 3. Cela signifie qu'au prochain bloc période le terminal pourra émettre via les voies montantes des canaux 2 et 3.

Dans l'étape 305 dans le terminal parcourt la liste 'alloc' pour savoir sur quel canal il est autorisé à émettre. A ce stade cette liste comporte la valeur 1. Le terminal n'est donc pas autorisé à émettre sur la voie montante du canal 1, ce qu'il fait.

Dans l'étape 306 le terminal incrémente la valeur de X de une unité. Et on passe à l'étape 303.

A ce stade X VAUT 4.

Dans l'étape 303 le terminal affecte le contenu de la liste 'alloc_next' à la liste 'alloc'. La liste 'alloc' comporte alors les valeurs 2 et 3.

Dans l'étape 304 le terminal lit les deux premiers paquets du bloc période BP3. Le premier de ces paquets comporte un numéro USF valant USF_1. Le deuxième paquet comporte un numéro USF valant USF_2. Le terminal met à jour la liste 'alloc_next', en écrasant son précédant contenu. La liste 'alloc_next' comporte maintenant, selon l'invention, les valeurs 1, 2 et 3. Cela signifie qu'au prochain bloc période le terminal pourra émettre via les voies montantes des canaux 1, 2 et 3.

Dans l'étape 305 dans le terminal parcourt la liste 'alloc' pour savoir sur quel canal il est autorisé à émettre. A ce stade cette liste comporte les valeurs 2, et 3. Le terminal est donc autorisé à émettre sur les voies montantes des canaux 2, et 3, ce qu'il fait.

Dans l'étape 306 le terminal incrémente la valeur de X de une unité. Et on passe à l'étape 303.

A ce stade X VAUT 5.

Dans l'étape 303 le terminal affecte le contenu de la liste 'alloc_next' à la liste 'alloc'. La liste 'alloc' comporte alors les valeurs 1, 2 et 3.

Dans l'étape 304 le terminal lit les deux premiers paquets du bloc période BP5. Le premier de ces paquets comporte un numéro USF ne valant pas USF_1. Le deuxième paquet comporte un numéro USF valant USF_2. Le terminal met à jour la liste 'alloc_next', en écrasant son précédant contenu. La liste 'alloc_next' comporte maintenant, selon l'invention, les valeurs 2 et 3. Cela signifie qu'au prochain bloc période le terminal pourra émettre via les voies montantes des canaux 2 et 3.

Dans l'étape 305 dans le terminal parcourt la liste 'alloc' pour savoir sur quel canal il est autorisé à émettre. A ce stade cette liste comporte les valeurs 1, 2, et 3. Le terminal est donc autorisé à émettre sur les voies montantes des canaux 1, 2, et 3, ce qu'il fait.

Dans l'étape 306 le terminal incrémente la valeur de X de une unité. Et on passe à l'étape 303.

A ce stade X VAUT 6.

Dans l'étape 303 le terminal affecte le contenu de la liste 'alloc_next' à la liste 'alloc'. La liste 'alloc' comporte alors les valeurs 2 et 3.

Dans l'étape 304 le terminal lit les deux premiers paquets du bloc période BP6. Le premier de ces paquets comporte un numéro USF valant USF_1. Le deuxième paquet comporte un numéro USF ne valant pas USF_2. Le terminal met à jour la liste 'alloc_next', en écrasant son précédant contenu. La liste 'alloc_next' comporte maintenant, selon l'invention, la valeur 1. Cela signifie qu'au prochain bloc période le terminal pourra émettre via la voie montante du canal 1.

Dans l'étape 305 dans le terminal parcourt la liste 'alloc' pour savoir sur quel canal il est autorisé à émettre. A ce stade cette liste comporte les valeurs 2 et 3. Le terminal est donc autorisé à émettre sur les voies montantes des canaux 2 et 3, ce qu'il fait.

Dans l'étape 306 le terminal incrémente la valeur de X de une unité. Et on passe à l'étape 303.

A ce stade X VAUT 7.

Dans l'étape 303 le terminal affecte le contenu de la liste 'alloc_next' à la liste 'alloc'. La liste 'alloc' comporte alors la valeur 1.

Dans l'étape 304 le terminal lit les deux premiers paquets du bloc période BP7. Le premier de ces paquets comporte un numéro USF ne valant pas USF_1. Le deuxième paquet comporte un numéro USF ne valant pas USF_2. Le terminal met à jour la liste 'alloc_next', en écrasant son précédant contenu. La liste 'alloc_next' est maintenant, selon l'invention, vide. Cela signifie qu'au prochain bloc période le terminal ne pourra pas émettre.

Dans l'étape 305 dans le terminal parcourt la liste 'alloc' pour savoir sur quel canal il est autorisé à émettre. A ce stade cette liste comporte la valeur 1. Le terminal est donc autorisé à émettre sur la voie montante du canal 1, ce qu'il fait.

Dans l'étape 306 le terminal incrémente la valeur de X de une unité. Et on passe à l'étape 303.

A ce stade X VAUT 8.

Dans l'étape 303 le terminal affecte le contenu de la liste 'alloc_next' à la liste 'alloc'. La liste 'alloc' est alors vide.

Dans l'étape 304 le terminal lit les deux premiers paquets du bloc période BP8. Le premier de ces paquets comporte un numéro USF valant USF_1. Le deuxième paquet comporte un numéro USF valant USF_2. Le terminal met à jour la liste 'alloc_next', en écrasant son précédant contenu. La liste 'alloc_next' comporte maintenant, selon l'invention, les valeurs 1, 2 et 3. Cela signifie qu'au prochain bloc période le terminal pourra émettre via les voies montantes des canaux 1, 2 et 3.

Dans l'étape 305 dans le terminal parcourt la liste 'alloc' pour savoir sur quel canal il est autorisé à émettre. A ce stade cette liste est vide. Le terminal n'est donc pas autorisé à émettre.

Dans l'étape 306 le terminal incrémente la valeur de X de une unité. Et on passe à l'étape 303.

A ce stade X VAUT 9.

Dans l'étape 303 le terminal affecte le contenu de la liste 'alloc_next' à la liste 'alloc'. La liste 'alloc' comporte alors les valeurs 1, 2 et 3.

Dans l'étape 304 le terminal lit les deux premiers paquets du bloc période BP9. Le premier de ces paquets comporte un numéro USF ne valant pas USF_1. Le deuxième paquet comporte un numéro USF ne valant pas USF_2. Le terminal met à jour la liste 'alloc_next', en écrasant son précédant contenu. La liste 'alloc_next' est maintenant, selon l'invention, vide. Cela signifie qu'au prochain bloc période le terminal ne pourra pas émettre.

Dans l'étape 305 dans le terminal parcourt la liste 'alloc' pour savoir sur quel canal il est autorisé à émettre. A ce stade cette liste comporte les valeurs 1, 2, et 3. Le terminal n'est donc pas autorisé à émettre sur les voies montantes des canaux 1, 2, et 3, ce qu'il fait.

Dans l'étape 306 le terminal incrémente la valeur de X de une unité, puis on passe à l'étape 303.

Le processus se répète tant qu'il y a des blocs période à traiter.

Les traitements des quelques blocs période cités en exemple illustrent le fait qu'avec le procédé d'allocation selon l'invention il est possible, sans changer de configuration multi fenêtres, d'allouer et de désallouer les ressources, canal par canal, d'un bloc période à l'autre. L'invention propose donc bien un procédé souple et ménageant le terminal. Avec l'invention, dans le cas de la classe 11, on passe de n'importe quelle allocation de ressource d'émission, à n'importe quelle autre allocation de ressources d'émission sans passage obligé.

Dans le cas d'un téléphone fonctionnant en classe douze en configuration multi fenêtres 1 + 4 = 5, l'invention permet soit d'allouer 0 canal, soit d'allouer 4 canaux pour émettre. En contrepartie, l'invention permet au téléphone de ne pas changer de configuration multi fenêtres en permanence.

Pour les classes supérieures à douze, et pour lesquelles S est supérieur à 5, l'invention reprend tout son sens. Et en règle générale l'invention est intéressante dès que, dans une configuration multi fenêtres M + N = S, avec N > M. Cela permet en effet au bloc radio de rang M de contrôler l'émission sur plusieurs blocs radio, alors que les blocs radio de rangs inférieurs strictement à M contrôlent l'émission sur un bloc radio.

## Revendications

1. Procédé d'allocation dynamique étendue de ressources de communication à un terminal connecté à un réseau de télécommunication, la ressource comportant une voie descendante, pour recevoir, et une voie montante, pour émettre, dans lequel la voie montante dans un bloc période BP est allouée au terminal via un paramètre reçu par la voie descendante correspondant dans le bloc période BP-1, ce paramètre désignant le terminal parmi ceux susceptible d'écouter la voie descendante, le terminal étant capable, par configuration, d'écouter M canaux, et d'émettre sur N canaux, M étant inférieur ou égal à N, le procédé étant **caractérisé en ce que**:
- la lecture (302 - 304) des M - 1 premiers canaux du bloc période BP-1 conditionne la possibilité d'émettre sur les M - 1 premiers canaux du bloc période BP,
- la lecture (302 - 304) du Mième canal du bloc période BP-1 conditionne la possibilité d'émettre sur les N - M + 1 autres canaux parmi les N canaux.

2. Procédé selon la revendication 1, **caractérisé en ce que** le terminal, et le réseau de télécommunication, fonctionnent selon le protocole GPRS.

3. Procédé selon l'une des revendications 1 ou 2, **caractérisé en ce que** M < N.

4. Procédé selon l'une des revendications 1 à 3, **caractérisé en ce que** M + N doit être inférieure ou égal à S.

5. Procédé selon la revendication 4, **caractérisé en ce que** S vaut 5.

6. Procédé selon la revendication 5, **caractérisé en ce que** M vaut 2 et N vaut 3.

7. Procédé selon l'une des revendications 2 à 6, **caractérisé en ce que** le terminal est un téléphone mobile fonctionnant selon la classe 11 des classes à pluralité de fenêtres.

## Claims

1. A method for the wide dynamic allocation of communication resources to a terminal connected to a telecommunication network, the resource comprising a downlink to receive and an uplink to send, in which the uplink in a block period BP is allocated to the terminal via a parameter received by the corresponding downlink in the block period BP-1, this parameter designating the terminal among those likely to playback the downlink, the terminal being capable, by configuration, of playback of M channels, and sending on N channels, M being less than or equal to N, the method being **characterised in that** :
- reading (302-304) of the M-1 first channels of block period BP-1 determines the possibility of sending on the M-1 first channels of block period BP,
- reading (302-304) of the mth channel of the block period BP-1 determines the possibility of sending on N-M + 1 other channels from among the N channels.

2. The method according to claim 1, **characterised in that** the terminal and the telecommunication network operate according to the GPRS protocol.

3. The method according to one of claims 1 or 2, **characterised in that** M < N.

4. The method according to one of claims 1 to 3, **characterised in that** M + N must be less than or equal to S.

5. The method according to claim 4, **characterised in that** S equals 5.

6. The method according to claim 5, **characterised in that** M equals 2 and N equals 3.

7. The method according to one of claims 2 to 6, **characterised in that** the terminal is a mobile telephone operating according to class 11 of the classes with a plurality of slots.

## Patentansprüche

1. Verfahren zum dynamischen erweiterten Zuweisen von Kommunikationsressourcen zu einem Terminal, das an ein Telekommunikationsnetzwerk angeschlossen ist, wobei die Ressource eine Abwärtsverbindung aufweist, um zu empfangen, und eine Aufwärtsverbindung, um zu senden, bei dem die Aufwärtsverbindung in einem Block Periode BP dem Terminal über einen Parameter zugewiesen wird, der von der Abwärtsverbindung empfangen wird, der in dem Block Periode BP-1 entspricht, wobei dieser Parameter das Terminal unter jenen bezeichnet, die die Abwärtsverbindung abhören können, wobei das Terminal durch Konfiguration fähig ist, M Kanäle abzuhören und auf N Kanälen zu senden, wobei M kleiner oder gleich N ist, wobei das Verfahren **dadurch gekennzeichnet ist,**
- **dass** das Lesen (302 - 304) der M - 1 ersten Kanäle des Blocks Periode BP-1 die Möglichkeit bedingt, auf den M - 1 ersten Kanälen des Blocks Periode BP zu senden,
- **dass** das Lesen (302 - 304) des M. Kanals des Blocks Periode BP-1 die Möglichkeit bedingt, auf den N - M + 1 anderen Kanälen unter den N Kanälen senden zu können.

2. Verfahren nach Anspruch 1, **dadurch gekennzeichnet, dass** das Terminal und das Telekommunikationsnetzwerk gemäß dem GPRS-Protokoll funktionieren.

3. Verfahren nach einem der Ansprüche 1 oder 2, **dadurch gekennzeichnet, dass** M < N ist.

4. Verfahren nach einem der Ansprüche 1 bis 3, **dadurch gekennzeichnet, dass** M + N kleiner oder gleich S sein muss.

5. Verfahren nach Anspruch 4, **dadurch gekennzeichnet, dass** S gleich 5 ist.

6. Verfahren nach Anspruch 5, **dadurch gekennzeichnet, dass** M gleich 2 ist und N gleich 3 ist.

7. Verfahren nach einem der Ansprüche 2 bis 6, **dadurch gekennzeichnet, dass** das Terminal ein Mobiltelefon ist, das gemäß der Klasse 11 der Klassen mit einer Vielzahl von Fenstern funktioniert.
